# EUROPÄISCHE PATENTSCHRIFT

(11) **EP 1 046 833 B1**
(45) Veröffentlichungstag und Bekanntmachung des Hinweises auf die Patenterteilung: **02.06.2004**
(21) Anmeldenummer: 00104509.5
(22) Anmeldetag: 10.03.2000
(51) Int. Cl.: F16F 13/14

(54) **Hydrolager**
Hydraulic support
Support hydraulique

(30) Priorität: 22.04.1999 DE 19918350
(43) Veröffentlichungstag der Anmeldung: 25.10.2000
(73) Patentinhaber: Volkswagen Aktiengesellschaft, 38436 Wolfsburg (DE)
(72) Erfinder: Hasselmeyer, Alfred, Dipl.-Ing., 38524 Sassenburg (DE)

(56) Entgegenhaltungen:
- DE-A- 4 233 705
- DE-A- 19 503 445
- DE-C- 4 137 692
- US-A- 5 516 083

## Beschreibung

Die vorliegende Erfindung betrifft ein Hydrolager gemäß dem Oberbegriff des Patentanspruches 1.

Ein derartiges Hydrolager ist zum Beispiel aus der DE-OS 195 03 445 bekannt. Dort ist ein Ventilglied 28 in Form einer Dichtlippe 38 in einem Überströmkanal vorgesehen, wobei im Normalfall ein Spalt zwischen der Dichtlippe 38 und einer Kanalwand verbleibt. Das Ventilglied ist dabei so ausgebildet, daß in Abhängigkeit von der Druckdifferenz am Ventilglied bzw. der Richtung der Überströmung des Ventilgliedes ein unterschiedliches Öffnungsverhalten der Dichtlippe vorliegt. In einer Richtung kann das Ventilglied teilweise oder vollständig den Durchgang sperren, während in der anderen Richtung eine freie Durchströmung möglich sein kann.

Solche Hydrolager werden bevorzugt an Hinterachsen von Fahrzeugen eingesetzt. Bei einer Relativbewegung zwischen einem innenliegenden Lagerteil des Hydrolagers und einem außenliegenden Lagerteil des Hydrolagers wird Fluid, welches durch den Überströmkanal von einer Fluidkammer in eine andere Fluidkammer strömt, unter Druck gesetzt. Dabei bestimmen die Kanallänge und der Kanalquerschnitt das Dämpfungsverhalten des Hydrolagers mit. Der Überströmkanal wird auch als Bypass bezeichnet, da es daneben noch einen Drosselkanal gibt, der die beiden Fluidkammern ständig in Fluidverbindung hält.

Bei kleineren Auslenkungen zwischen innerem Lagerteil und äußerem Lagerteil "schwingt" das Fluid zwischen den Fluidkammern über die ständige Fluidverbindung, d.h. den Drosselkanal hin- und her. Bei größeren Auslenkungen, zum Beispiel infolge von Schlägen und/oder Stößen, treten größere Druckdifferenzen in den Fluidkammern auf und es soll der Bypass bzw. Überströmkanal öffnen, um durch Drosseldämpfung zu wirken.

Ist das Durchströmen durch Anlage des Ventilglieds an der Kanalwand unter einer gewissen Vorspannung unterbunden, wird das Überströmen infolge einer auftretenden Haftreibung erst mit einer bestimmten Verzögerung eintreten. Diese Haftreibung tritt zwischen der Dichtlippe und der gegenüberliegenden, berührenden Kanalwand auf.

Demzufolge ist es die Aufgabe der vorliegenden Erfindung, ein Hydrolager zu schaffen, welches im Öffnungsverhalten des Ventilgliedes optimiert ist.

Diese Aufgabe wird durch ein Hydrolager gemäß Patentanspruch 1 gelöst.

Ein solches Hydrolager umfaßt ein äußeres Lagerteil, ein inneres Lagerteil, einen zwischen den beiden Lagerteilen angeordneten Elastomerkörper, der zumindest zwei Fluidräume aufweist, die über mindestens einen Drosselkanal und einen Überströmkanal in Fluidverbindung stehen, wobei in dem Überströmkanal ein elastisches Ventilglied angeordnet ist, welches bei Überdruck öffnet, und wobei das Ventilglied einen Dichtwulst umfaßt, der die abdichtende Anlage des Ventilgliedes im Überstromkanal ermöglicht, und wobei das Ventilglied zumindest eine Weichzone aufweist.

Ein besonderer Vorteil eines erfindungsgemäßen Hydrolagers ist es, eine akustische Entkopplung am Überströmkanal zu erzielen, so daß die Geräuschentwicklung deutlich reduziert ist. Diese Entkopplung wird im wesentlichen durch die Mikroelastizität der Weichzone bei einer Druckbeaufschlagung des Ventilglieds erreicht.

Weiterbildungen des erfindungsgemäßen Hydrolagers sind der Gegenstand von Unteransprüchen.

Die vorliegenden Erfindung wird im folgenden anhand der zugehörigen Zeichnungen näher beschrieben, in denen die:
Fig. 1 eine schematische Querschnittansicht eines erfindungsgemäßen Hydrolagers von der Seite zeigt;
Fig. 2 eine vergrößerte Teilansicht nach der Figur 1 zeigt;
Fig. 3 eine Draufsicht auf ein Ventilglied nach der vorliegenden Erfindung zeigt, wobei das Ventilglied geschlossen ist;
Fig. 3a eine Seitenansicht des Ventilglieds nach der Figur 3, wobei ein Teil des Ventilglieds durchgewölbt dargestellt ist;
Fig. 4 eine Draufsicht, ähnlich der Figur 3 zeigt, wobei das Ventilglied geöffnet ist;
Fig. 5 eine Querschnittansicht einer weiteren Ausführungsform eines erfindungsgemäßen Hydrolagers zeigt; und
Fig. 6 eine teilweise aufgebrochene Darstellung des Hydrolagers nach der Figur 5 zeigt.

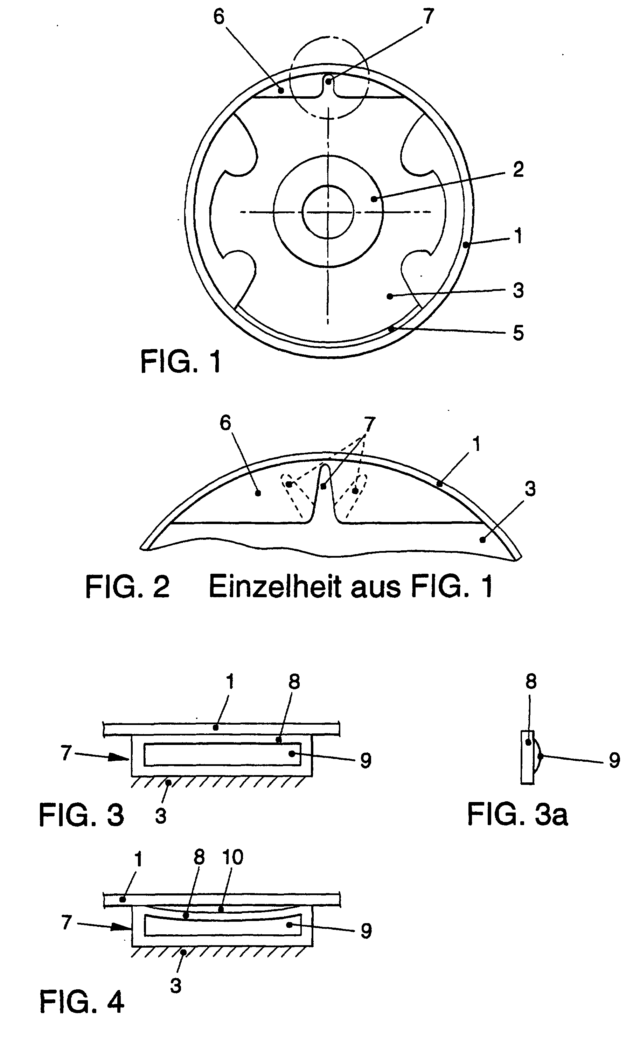

In der Figur 1 ist ein Hydrolager nach einer ersten Ausführungsform der vorliegenden Erfindung schematisch im Querschnitt dargestellt. Zwischen einem äußeren, rohrförmigen Lagerteil 1 und einem inneren, rohrförmigen Lagerteil 2 ist ein Elastomerkörper 3 angeordnet, der über zumindest zwei Fluidräume 4 verfügt.

Die beiden Fluidräume 4 sind in der gezeigten Ausführungsform durch einen Drosselkanal 5 miteinander verbunden. Nach der Figur 1 ist der Drosselkanal 5 im unteren Bereich des Hydrolagers ausgebildet und verläuft kreisringsegmentförmig parallel zum Außenumfang des Elastomerkörpers 3.

Bei einer Relativbewegung zwischen dem äußeren und dem inneren Lagerteil 1 und 2 wird der Elastomerkörper 3 verformt. Infolge dieser Verformung werden auch die Fluidräume 4 einer Veränderung im Volumen unterworfen. Infolge dieser Volumenänderung kommt es zu einer Verdrängung des Fluids. Wird beispielsweise in der Figur 1 der linke Fluidraum 4 verkleinert, wenn sich das innere Lagerteil 1 nach links verlagert, so wird ein Teil des Fluids, welches in dem linken Fluidraum 4 vorhanden ist, durch den Drosselkanal 5 in den rechten Fluidraum 4 gedrückt.

Bei kleineren Verlagerungen, d.h. auch Schwingungen der Lagerteile 1 und 2 ist dieser Fluidausgleich zwischen den Fluidräumen 4 über den Drosselkanal 5 ausreichend. Für größere Verlagerungen, zum Beispiel infolge von Stößen, die an dem Hydrolager angreifen, ist ein Überströmkanal 6 vorgesehen, der bei großen Druckdifferenzen eine Fluidverbindung zwischen den Fluidräumen 4 herstellt (siehe Figur 2).

Um eine dynamische Druckerhöhung, die zum Teil durch die Haftreibung zwischen einem Ventilglied 7 in dem Überströmkanal 6 und der damit in Anlage befindlichen Kanalwand erzeugt wird, zu vermeiden, ist das Ventilglied 7 mit einem Dichtwulst 8 und zumindest einer Weichzone 9 versehen. In der Figur 3 und 4 ist dieses Ventilglied 7 vergrößert dargestellt.

Eine Druckerhöhung vor dem Öffnen des Überströmkanals würde stark komfortvermindemd wirken, d.h. daß die Stöße am Hydrolager nicht abgefangen werden und daß es zur Geräuschbildung kommt.

Um diese nachteiligen Wirkungen zu vermeiden, ist das Ventilglied 7 mit einem Dichtwulst 8 versehen, der am Umfang des Kanalquerschnitts des Überströmkanals 6 umläuft. Infolge des beispielhaft dargestellten rechteckigen Querschnitts des Überströmkanals 6 ist auch der Dichtwulst 8 in Form eines Rechtecks in den Figuren 3 und 4 dargestellt. Innerhalb des Dichtwulstes 8 befindet sich eine Weichzone 9, die eine geringere Dicke und/oder eine höhere Elastizität als der Dichtwulst 8 aufweist.

Die Wirkungsweise dieses Ventilgliedes 7 wird im folgenden beschrieben. Bei einer Druckdifferenz auf beiden Seiten des Ventilgliedes 7 kommt es infolge der Elastizität der Weichzone 9 zu einer Durchwölbung bzw. Ausbauchung der Weichzone 9, wie dies in der Figur 3a dargestellt ist. Bei einem bestimmten Ausmaß der Durchwölbung der Weichzone 9 wird der Dichtwulst 8 ebenfalls mit verformt und, wie es in der Figur 4 gezeigt ist, von der Kanalwand teilweise abgehoben, so daß eine Öffnung 10 entsteht.

Infolge der Öffnung 10 ist die Haftreibung zwischen Ventilglied 7 und Kanalwand deutlich verringert und somit eine dynamische Druckerhöhung sicher zu vermeiden.

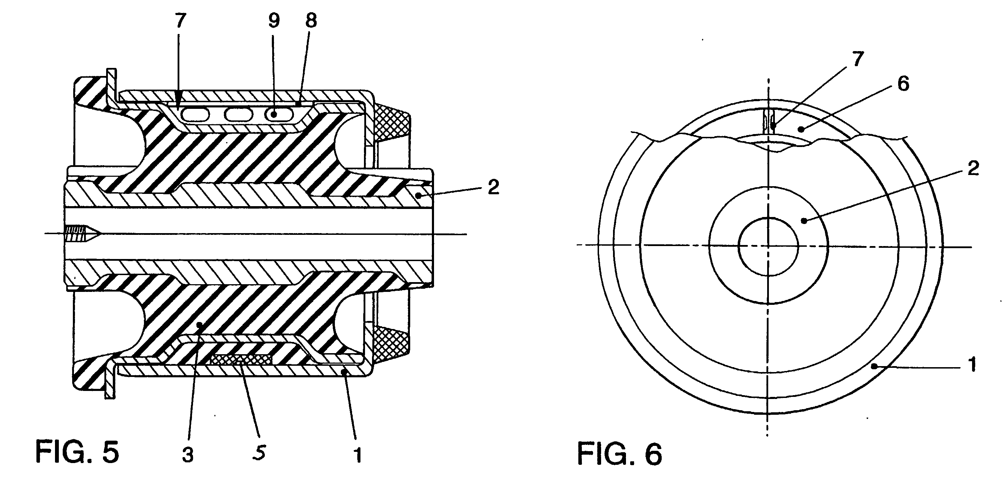

In den Figuren 5 und 6 ist eine zweite Ausführungsform des erfindungsgemäßen Hydrolagers dargestellt. Dort sind mehrere Weichzonen 9 über das Ventilglied 7 verteilt angeordnet. Die Weichzonen 9 sind dabei als flächige, im wesentlichen ovale Bereiche vorgesehen.

Das Ventilglied 7 kann, wie in den Figuren 1, 2 und 6 gezeigt als im wesentlichen radial verlaufendes Element vorgesehen werden oder aber schräg zum Radius verlaufend angeordnet sein. In einer nicht dargestellten Ausführungsform können auch mehrere Überströmkanäle 6 vorgesehen werden, in denen dann jeweils ein Ventilglied 7 angeordnet ist. Durch Auslegung der Öffnungskennlinie jedes Ventilglieds läßt sich ein individuelles Öffnen jedes Ventilglieds erreichen, so daß bei bestimmten Druckdifferenzen unterschiedliche Ventilglieder mit einem Öffnen des jeweiligen Überströmkanals reagieren.

Die vorliegende Erfindung zeichnet sich somit zusammenfassend dadurch aus, daß infolge des Membranzuges mittels der Durchwölbung der Weichzone 9 das Ventilglied 7 leicht öffnet, und daß durch die Mikroelastizität der Weichzone(n) eine akustische Entkopplung am Hydrolager erreicht wird, die nach dem Stand der Technik nicht möglich ist.

Hinsichtlich vorstehend im einzelnen nicht näher erläuterter Merkmale der Erfindung wird im übrigen ausdrücklich auf die Ansprüche und die Zeichnungen verwiesen.

### BEZUGSZEICHENLISTE

- 1: äußeres Lagerteil
- 2: inneres Lagerteil
- 3: Elastomerkörper
- 4: Fluidraum
- 5: Drosselkanal
- 6: Überströmkanal
- 7: Ventilglied
- 8: Dichtwulst
- 9: Weichzone
- 10: Öffnung

## Patentansprüche

1. Hydrolager, mit
einem äußeren Lagerteil (1);
einem inneren Lagerteil (2);
einem zwischen den beiden Lagerteilen (1, 2) angeordneten Elastomerkörper (3), der zumindest zwei Fluidräume (4) aufweist,
die über mindestens einen Drosselkanal (5) und einen Überströmkanal (6) in Fluidverbindung stehen; wobei
in dem Überströmkanal (6) ein elastisches Ventilglied (7) angeordnet ist, welches einen Dichtwulst (8) umfaßt, der die abdichtende Anlage des Ventilgliedes (7) im Überstromkanal (6) ermöglicht, und welches bei Überdruck öffnet,
**dadurch gekennzeichnet, daß**
das Ventilglied (7) zumindest eine Weichzone (9) aufweist, die eine akustische Entkoppelungsmembran bildet.

2. Hydrolager nach Anspruch 1, **dadurch gekennzeichnet, daß** der Dichtwulst (8) als ein zumindest teilweise umlaufender, verdickter Randabschnitt des Ventilgliedes (7) ausgeführt ist.

3. Hydrolager nach Anspruch 1 oder 2, **dadurch gekennzeichnet, daß** die zumindest eine Weichzone (9) von dem Dichtwulst (8) umgeben ist.

4. Hydrolager nach einem der Ansprüche 1 bis 3, **dadurch gekennzeichnet, daß** mehrere Weichzonen (9) vorgesehen sind, die über den Querschnitt des Überströmkanals (6) am Ventilglied (7) verteilt angeordnet sind.

5. Hydrolager nach einem der Ansprüche 1 bis 4, **dadurch gekennzeichnet, daß** bei einem Überdruck im Überströmkanal (6) eine Auslenkung des Ventilglieds (7) erfolgt.

6. Hydrolager nach Anspruch 5, **dadurch gekennzeichnet, daß** die Auslenkung bei einem großen Differenzdruck im Überströmkanal (6) das vollständige Ventilglied (7) erfaßt.

7. Hydrolager nach Anspruch 5, **dadurch gekennzeichnet, daß** die Auslenkung bei einem niedrigen Differenzdruck im Überströmkanal (6) nur die Weichzone(n) (9) betrifft.

8. Hydrolager nach einem der Ansprüche 1 bis 7, **dadurch gekennzeichnet, daß** das Ventilglied (7) in einen im Querschnitt im wesentlichen rechteckigen Überstromkanal (6) angeordnet ist.

9. Hydrolager nach einem der Ansprüche 1 bis 8, **dadurch gekennzeichnet, daß** zwei Überströmkanäle (6) vorgesehen sind, in denen jeweils ein Ventilglied (7) angeordnet ist.

10. Hydrolager nach Anspruch 9, **dadurch gekennzeichnet, daß** jedes der Ventilglieder (7) eine unterschiedliche Öffnungskennlinie aufweist.

11. Hydrolager nach einem der Ansprüche 1 bis 10, **dadurch gekennzeichnet, daß** das Ventilglied (7) senkrecht im Überstömkanal (6) oder schräg im Überströmkanal (6) angeordnet ist.

12. Hydrolager nach einem der Ansprüche 1 bis 11, **dadurch gekennzeichnet, daß** bei einer Auslenkung der Weichzone (9) des Ventilglieds (7), ab einem bestimmten Grad dieser Auslenkung, auch die abdichtende Anlage des Dichtwulstes (8) aufgehoben wird.

## Claims

1. Hydraulic bearing, having
an outer bearing part (1);
an inner bearing part (2);
an elastomer body (3) which is arranged between the two bearing parts (1, 2) and has at least two fluid spaces (4)
which are fluidically connected via at least one constricting channel (5) and an overflow channel (6);
an elastic valve element (7) being arranged in the overflow channel (6) and comprising a sealing bead (8) which makes it possible for the valve element (7) to bear in a sealing manner in the overflow channel (6), and which opens when there is positive pressure, **characterized in that** the valve element (7) has at least one soft zone (9) which forms an acoustic decoupling membrane.

2. Hydraulic bearing according to Claim 1, **characterized in that** the sealing bead (8) is designed as an at least partially encircling, thickened edge section of the valve element (7).

3. Hydraulic bearing according to Claim 1 or 2, **characterized in that** the at least one soft zone (9) is surrounded by the sealing bead (8).

4. Hydraulic bearing according to one of Claims 1 to 3, **characterized in that** a plurality of soft zones (9) are provided and are distributed over the cross section of the overflow channel (6) on the valve element (7).

5. Hydraulic bearing according to one of Claims 1 to 4, **characterized in that**, when there is a positive pressure in the overflow channel (6), the valve element (7) is deflected.

6. Hydraulic bearing according to Claim 5, **characterized in that**, when there is a large difference in pressure in the overflow channel (6), the deflection encompasses the entire valve element (7).

7. Hydraulic bearing according to Claim 5, **characterized in that**, when there is a small difference in pressure in the overflow channel (6), the deflection relates only to the soft zone(s) (9).

8. Hydraulic bearing according to one of Claims 1 to 7, **characterized in that** the valve element (7) is arranged in an overflow channel (6) which is essentially rectangular in cross section.

9. Hydraulic bearing according to one of Claims 1 to 8, **characterized in that** two overflow channels (6) in which a respective valve element (7) is arranged are provided.

10. Hydraulic bearing according to Claim 9, **characterized in that** each of the valve elements (7) has a different opening characteristic.

11. Hydraulic bearing according to one of Claims 1 to 10, **characterized in that** the valve element (7) is arranged vertically in the overflow channel (6) or obliquely in the overflow channel (6).

12. Hydraulic bearing according to one of Claims 1 to 11, **characterized in that**, when the soft zone (9) of the valve element (7) is deflected, the sealing bead (8) also stops bearing in a sealing manner after a certain degree of this deflection.

## Revendications

1. Support hydraulique, comprenant
une partie de support extérieure (1) ;
une partie de support intérieure (2) ;
un corps élastomère (3) disposé entre les deux parties de support (1, 2), lequel présente au moins deux espaces fluidiques (4),
qui sont en liaison fluidique par le biais d'au moins un canal d'étranglement (5) et d'un canal de débordement (6) ;
un organe de soupape élastique (7) étant disposé dans le canal de débordement (6), lequel comprend un bourrelet d'étanchéité (8) qui permet l'application étanche de l'organe de soupape (7) dans le canal de débordement (6) et qui s'ouvre en cas de surpression,
**caractérisé en ce que**
l'organe de soupape (7) présente au moins une zone souple (9) qui forme une membrane de désaccouplement acoustique.

2. Support hydraulique selon la revendication 1, **caractérisé en ce que** le bourrelet d'étanchéité (8) est réalisé sous la forme d'une portion de bord épaissie de l'organe de soupape (7), au moins partiellement périphérique.

3. Support hydraulique selon la revendication 1 ou 2, **caractérisé en ce que** l'au moins une zone souple (9) est entourée par le bourrelet d'étanchéité (8).

4. Support hydraulique selon l'une quelconque des revendications 1 à 3, **caractérisé en ce que** plusieurs zones souples (9) sont prévues, lesquelles sont réparties sur la section transversale du canal de débordement (6) sur l'organe de soupape (7).

5. Support hydraulique selon l'une quelconque des revendications 1 à 4, **caractérisé en ce que** dans le cas d'une surpression dans le canal de débordement (6), il se produit une déviation de l'organe de soupape (7).

6. Support hydraulique selon la revendication 5, **caractérisé en ce que** la déviation s'applique à tout l'organe de soupape (7) dans le cas d'une grande différence de pression dans le canal de débordement (6).

7. Support hydraulique selon la revendication 5, **caractérisé en ce que** la déviation ne concerne que la ou les zones souples (9) dans le cas d'une différence de pression relativement faible dans le canal de débordement (6).

8. Support hydraulique selon l'une quelconque des revendications précédentes 1 à 7, **caractérisé en ce que** l'organe de soupape (7) est disposé dans un canal de débordement (6) de section transversale essentiellement rectangulaire.

9. Support hydraulique selon l'une quelconque des revendications 1 à 8, **caractérisé en ce que** deux canaux de débordement (6) sont prévus, dans lesquels est disposé à chaque fois un organe de soupape (7).

10. Support hydraulique selon la revendication 9, **caractérisé en ce que** chacun des organes de soupape (7) présente une caractéristique d'ouverture différente.

11. Support hydraulique selon l'une quelconque des revendications 1 à 10, **caractérisé en ce que** l'organe de soupape (7) est disposé perpendiculairement dans le canal de débordement (6) ou obliquement dans le canal de débordement (6).

12. Support hydraulique selon l'une quelconque des revendications 1 à 11, **caractérisé en ce que** dans le cas d'une déviation de la zone souple (9) de l'organe de soupape (7), à partir d'un certain degré de cette déviation, l'application étanche du bourrelet d'étanchéité (8) est arrêtée.
